(19) Europäisches Patentamt
European Patent Office
Office européen des brevets

(11) Veröffentlichungsnummer : **0 585 199 A1**

(12) **EUROPÄISCHE PATENTANMELDUNG**

(21) Anmeldenummer : **93810524.4**

(22) Anmeldetag : **21.07.93**

(51) Int. Cl.$^5$ : **A01N 47/36,** A01N 25/32, // (A01N47/36, 43:42, 25:32)

(30) Priorität : **30.07.92 CH 2400/92**
**26.08.92 CH 2647/92**

(43) Veröffentlichungstag der Anmeldung :
**02.03.94 Patentblatt 94/09**

(84) Benannte Vertragsstaaten :
**AT BE CH DE DK ES FR GB GR IT LI LU MC NL PT SE**

(71) Anmelder : **CIBA-GEIGY AG**
**Klybeckstrasse 141**
**CH-4002 Basel (CH)**

(72) Erfinder : **Glock, Jutta, Dr.**
**Innere Eigenmatt 3**
**CH-4336 Kaisten (CH)**
Erfinder : **Kerber, Elmar, Dr.**
**Niederwihl 131**
**D-7883 Görwihl (DE)**

(54) **Selektiv-herbizides Mittel.**

(57) Ein selektiv-herbizides Mittel zur Bekämpfung von Gräsern und Unkräutern in Nutzpflanzenkulturen besteht

a) aus einer herbizid wirksamen Menge eines Sulfonylharnstoffs der Formel I

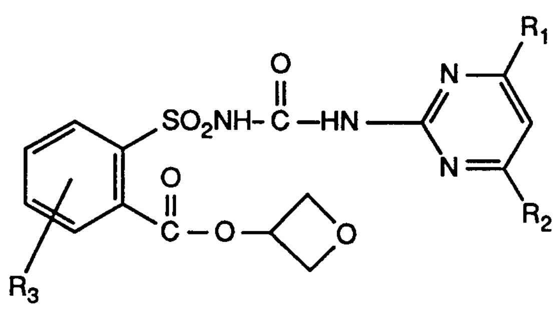

(I)

worin
$R_1$ und $R_2$ unabhängig voneinander Methyl oder Methoxy ;
$R_3$ Wasserstoff, Halogen, Methyl oder Methoxy bedeuten ; und

b) aus einer herbizid-antagonistisch wirksamen Menge eines Chinolinderivates der Formel II

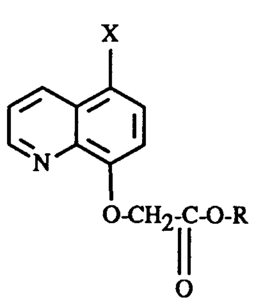

(II),

worin
R für Wasserstoff oder $C_1$-$C_8$-Alkyl und
X für Wasserstoff oder Chlor stehen.

EP 0 585 199 A1

Die vorliegende Erfindung betrifft ein selektiv-herbizides Mittel zur Bekämpfung von Gräsern und Unkräutern in Kulturen von Nutzpflanzen, insbesondere in Getreidekulturen, welches aus einem Herbizid und einem Safener (Gegenmittel, Antidot) besteht, welches die Nutzpflanzen, nicht aber die Unkräuter vor der phytotoxischen Wirkung des Herbizides bewahrt, sowie die Verwendung dieses Mittels oder der Kombination Herbizid und Safener zur Unkrautbekämpfung in Nutzpflanzenkulturen.

Beim Einsatz von Herbiziden können in Abhängigkeit von Faktoren wie beispielsweise Dosis des Herbizids und Applikationsart, Art der Kulturpflanze, Bodenbeschaffenheit und klimatischen Bedingungen, wie beispielsweise Belichtungsdauer, Temperatur und Niederschlagsmengen, die Kulturpflanzen in erheblichem Maße geschädigt werden. Insbesondere kann es zu starken Schädigungen kommen, wenn im Rahmen der Fruchtfolge nach Kulturpflanzen, die gegen die Herbizide resistent sind, andere Kulturpflanzen angebaut werden, welche keine oder nur unzureichende Resistenz gegenüber den Herbiziden aufweisen.

Um diesem Problem zu begegnen, sind schon verschiedene Stoffe vorgeschlagen worden, welche befahigt sind, die schädigende Wirkung des Herbizids auf die Kulturpflanze spezifisch zu antagonisieren, das heißt, die Kulturpflanze zu schützen ohne dabei die Herbizidwirkung auf die zu bekämpfenden Unkräuter merklich zu beeinflussen. Dabei hat es sich gezeigt, daß die vorgeschlagenen Safener sowohl bezüglich der Kulturpflanzen als auch bezüglich des Herbizids und gegebenenfalls auch in Abhängigkeit von der Applikationsart oft sehr artspezifisch wirken, das heißt ein bestimmter Safener eignet sich oft nur für eine bestimmte Kulturpflanze und eine spezielle Herbizid-Stoffklasse. So sind aus EP-A-0 094 349 Chinolinderivate bekannt, die Kulturpflanzen vor der phytotoxischen Wirkung von Herbiziden bestimmter Stoffklassen, wie beispielsweise Phenoxypropionsäureester-Herbizide, Harnstoffe, Carbamate oder Diphenylether, schützen.

Es wurde nun gefunden, daß sich ganz spezielle, aus EP-A-0 094 349 bekannte Chinolinderivate zum Schützen von Kulturpflanzen vor der phytotoxischen Wirkung einer besonderen Klasse von Sulfonylharnstoffherbiziden eignen.

Erfindungsgemäß wird somit ein selektiv-herbizides Mittel vorgeschlagen, welches dadurch gekennzeichnet ist, daß es neben inerten Zutaten wie Trägerstoffen, Lösungsmitteln und Netzmitteln als wirksame Komponente eine Mischung enthält, die

a) aus einer herbizid wirksamen Menge eines Sulfonylharnstoffs der Formel I

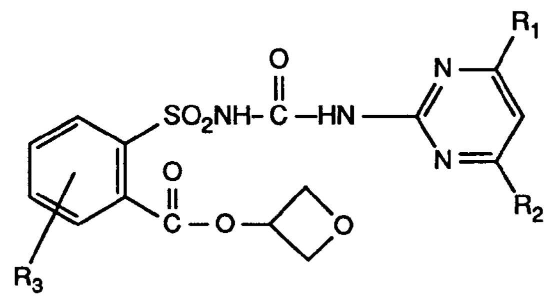

(I)

worin

$R_1$ und $R_2$ unabhängig voneinander Methyl oder Methoxy;

$R_3$ Wasserstoff, Halogen, Methyl oder Methoxy bedeuten; und

b) als Safener aus einer herbizid-antagonistisch wirksamen Menge eines Chinolinderivates der Formel II

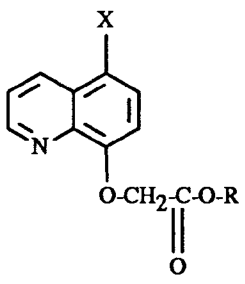

(II),

worin

R für Wasserstoff oder $C_1$-$C_8$-Alkyl und

X für Wasserstoff oder Chlor stehen, besteht.

Als Alkylgruppen kommen geradkettige oder verzweigte Alkylgruppen in Betracht, beispielsweise Methyl, Ethyl, n-Propyl, iso-Propyl, n-Butyl, iso-Butyl, sek.-Butyl oder tert.-Butyl, sowie die verschiedenen isomeren Pentyl-, Hexyl-, Heptyl- und Octyl-Reste.

Halogen steht für Fluor, Chlor, Brom oder Jod, vorzugsweise jedoch für Fluor.

Die Verbindungen der Formel I können Salze bilden, bei denen der Wasserstoff der $-SO_2-NH-$Gruppe durch ein für die Landwirtschaft geeignetes Kation ersetzt wird. Diese Salze sind beispielsweise Metallsalze, insbesondere Alkali- oder Erdalkalisalze oder auch Ammoniumsalze oder Salze mit organischen Aminen.

Als Beispiele für zur Ammonium-Kationenbildung geeignete Amine kommen sowohl Ammoniak wie auch primäre, sekundäre und tertiäre $C_1$-$C_{18}$-Alkylamine, $C_1$-$C_4$-Hydroxyalkylamine und $C_2$-$C_4$-Alkoxyalkylamine in Betracht, beispielsweise Methylamin, Ethylamin, n-Propylamin, iso-Propylamin, die vier isomeren Butylamine, n-Amylamin, iso-Amylamin, Hexylamin, Heptylamin, Octylamin, Nonylamin, Decylamin, Pentadecylamin, Hexadecylamin, Heptadecylamin, Octadecylamin, Methyl-ethylamin, Methyl-iso-propylamin, Methyl-hexylamin, Methyl-nonylamin, Methyl-pentadecylamin, Methyl-octadecylamin, Ethyl-butylamin, Ethyl-heptylamin, Ethyl-octylamin, Hexyl-heptylamin, Hexyl-octylamin, Dimethylamin, Diethylamin, Di-n-propylamin, Di-iso-propylamin, Di-n-butylamin, Di-n-amylamin, Di-iso-amylamin, Dihexylamin, Diheptylamin, Dioctylamin, Ethanolamin, n-Propanolamin, iso-Propanolamin, N,N-Diethanolamin, N-Ethylpropanolamin, N-Butylethanolamin, Allylamin, n-Butenyl-2-amin, n-Pentenyl-2-amin, 2,3-Dimethylbutenyl-2-amin, Di-butenyl-2-amin, n-Hexenyl-2-amin, Propylendiamin, Trimethylamin, Triethylamin, Tri-n-propylamin, Tri-iso-propylamin, Tri-n-butylamin, Tri-iso-butylamin, Tri-sek.-butylamin, Tri-n-amylamin, Methoxyethylamin und Ethoxyethylamin; heterocyclische Amine wie z.B. Pyridin, Chinolin, iso-Chinolin, Morpholin, Piperidin, Pyrrolidin, Indolin, Chinuclidin und Azepin; primäre Arylamine wie z.B. Aniline, Methoxyaniline, Ethoxyaniline, o,m,p-Toluidine, Phenylendiamine, Benzidine, Naphthylamine und o,m,p-Chloraniline; insbesondere aber Triethylamin, iso-Propylamin und Di-iso-propylamin.

Für die Verwendung im erfindungsgemäßen Mittel bevorzugte Verbindungen der Formel I oder deren Salze sind solche, worin $R_3$ für Wasserstoff oder 4-Fluor steht. Ferner sind Verbindungen der Formel I bevorzugt, worin $R_1$ für Methoxy steht. Für diese Verbindungen sind insbesondere diejenigen Safener der Formel II geeignet, bei denen X für Chlor und R für $C_4$-$C_8$-Alkyl, besonders bevorzugt für 1-Methylhexyl steht.

In ganz besonders bevorzugten erfindungsgemäßen Mitteln wird ein herbizid wirksamer Sulfonylharnstoff der Formel I verwendet, worin $R_1$ für Methyl und $R_2$ für Methoxy steht. Für diese erfindungsgemäßen Mittel sind insbesondere diejenigen Safener der Formel II geeignet, bei denen X für Chlor und R für $C_4$-$C_8$-Alkyl, besonders bevorzugt für 1-Methylhexyl steht.

Ein ganz besonders bevorzugtes erfindungsgemäßes Mittel enthält eine herbizid wirksame Menge eines Sulfonylharnstoffs der Formel Ia

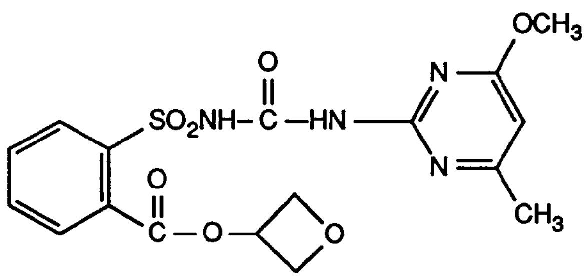

(Ia)

und als Safener eine herbizid-antagonistisch wirksame Menge eines Chinolinderivates der Formel IIa

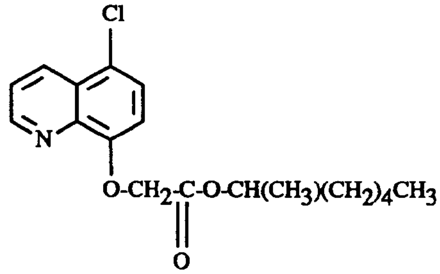

(IIa).

Die Sulfonylharnstoffherbizide aus dem Umfang der Formel I und deren Herstellung sind aus EP-A-0 496 701 bekannt.

Die Chinolinderivate aus dem Umfang der Formel II und deren Herstellung sind ebenfalls bekannt und z.B. in der Patentschrift EP-A-0 094 349 beschrieben.

Die Erfindung betrifft auch ein Verfahren zum selektiven Bekämpfen von Unkräutern in Nutzpflanzenkulturen, welches darin besteht, daß man die Nutzpflanzen, deren Samen oder Stecklinge oder deren Anbaufläche gleichzeitig oder unabhängig voneinander mit einer herbizid wirksamen Menge des Sulfonylharnstoffs der Formel I und einer herbizid-antagonistisch wirksamen Menge eines Chinolinderivates der Formel II behandelt.

Als Kulturpflanzen, welche durch die Chinolinderivate der Formel II gegen schädigende Wirkung der oben erwähnten Herbizide geschützt werden können, kommen insbesondere diejenigen in Betracht, die auf dem Nahrungs- oder Textilsektor von Bedeutung sind, beispielsweise Zuckerrohr und insbesondere Kulturhirse, Mais, Reis und andere Getreidearten wie Weizen, Roggen, Gerste und Hafer, vorzugsweise Weizen, Gerste, Roggen und Hafer, ganz besonders bevorzugt aber Weizen und Gerste.

Bei den zu bekämpfenden Unkräutern kann es sich sowohl um monokotyle wie um dikotyle Unkräuter handeln.

Als Kulturpflanzen oder Teile dieser Pflanzen kommen beispielsweise die vorstehend genannten in Betracht. Als Anbauflächen gelten die bereits mit den Kulturpflanzen bewachsenen oder mit dem Saatgut dieser Kulturpflanzen beschickten Bodenareale, wie auch die zur Bebauung mit diesen Kulturpflanzen bestimmten Böden.

Ein Safener oder Antidot der Formel II kann je nach Anwendungszweck zur Vorbehandlung des Saatgutes der Kulturpflanze (Beizung des Samens oder der Stecklinge) eingesetzt oder vor oder nach der Saat in den Boden gegeben werden. Es kann aber auch für sich allein oder zusammen mit dem Herbizid vor oder nach dem Auflaufen der Pflanzen appliziert werden. Die Behandlung der Pflanze oder des Saatgutes mit dem Safener kann daher grundsätzlich unabhängig vom Zeitpunkt der Applikation der phytotoxischen Chemikalie erfolgen. Die Behandlung der Pflanze kann jedoch auch durch gleichzeitige Applikation von phytotoxischer Chemikalie und Safener (Tankmischung) erfolgen. Die pre-emergente Behandlung schließt sowohl die Behandlung der Anbaufläche vor der Aussaat als auch die Behandlung der angesäten, aber noch nicht bewachsenen Anbauflächen ein.

Die zu applizierende Aufwandmenge Safener im Verhältnis zum Herbizid richtet sich weitgehend nach der Anwendungsart. Bei einer Feldbehandlung, welche entweder unter Verwendung einer Tankmischung mit einer Kombination von Safener und Herbizid oder durch getrennte Applikation von Safener und Herbizid erfolgt, liegt in der Regel ein Verhältnis von Safener zu Herbizid von 1:100 bis 10:1, bevorzugt 1:20 bis 10:1 vor.

In der Regel werden bei der Feldbehandlung 0,001 bis 5,0 kg Safener/ha, vorzugsweise 0,005 bis 0,5 kg Safener/ha, appliziert.

Die Aufwandmengen an Herbizid liegt in der Regel zwischen 0,001 bis 2 kg/ha, vorzugsweise jedoch zwischen 0,001 bis 0,5 kg/ha.

Bei der Samenbeizung werden im allgemeinen 0,001 bis 10 g Safener/kg Samen, vorzugsweise 0,05 bis 2 g Safener/kg Samen, appliziert. Wird der Safener in flüssiger Form kurz vor der Aussaat unter Samenquellung appliziert, so werden zweckmäßigerweise Safener-Lösungen verwendet, welche den Wirkstoff in einer Konzentration von 1 bis 10000, vorzugsweise von 100 bis 1000 ppm, enthalten.

Zur Applikation werden die Verbindungen der Formel II oder Kombinationen von Verbindungen der Formel II mit den zu antagonisierenden Herbiziden zweckmäßigerweise zusammen mit den in der Formulierungstechnik üblichen Hilfsmitteln eingesetzt und werden daher z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen, in bekannter Weise verarbeitet. Die Anwendungsverfahren wie Versprühen, Vernebeln, Verstäuben, Verstreuen, Bestreichen oder Gießen werden gleich wie die Art der zu verwendenden Mittel den angestrebten Zielen und den gegebenen Verhältnissen entsprechend gewählt.

Die Formulierungen, d.h. die den Wirkstoff der Formel II oder eine Kombination von Wirkstoff der Formel II mit zu antagonisierendem Herbizid der Formel I und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole, sowie deren Ether und Ester wie Ethanol, Ethylenglykol, Ethylenglykolmonomethyl- oder ethylether, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnußöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach Art des zu formulierenden Wirkstoffs der Formel II und gegebenenfalls auch dem zu antagonisierenden Herbizid der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen seien die Alkali-, Erdalkali- oder gegebenenfalls substituierten Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuß- oder Talgöl gewonnen werden können, genannt. Ferner sind auch die Fettsäure-methyltaurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschließt, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Ethylenoxid-Addukten.

Die sulfonierten Benzimidazolderivate enthalten vorzugsweise 2-Sulfonsäuregruppen und einen Fettsäurerest mit 8 bis 22 C-Atomen. Alkylarylsulfonate sind z.B. die Na-, Ca- oder Triethanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Ethylenoxid-Adduktes oder Phospholipide in Frage.

Als nichtionische Tenside kommen in erster Linie Polyglykoletherderivate von aliphatischen oder cycloaliphatischen Alkoholen, gesättigten oder ungesättigten Fettsäuren und Alkylphenolen in Frage, die 3 bis 30 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Ethylenglykolethergruppen und 10 bis 100 Propylenglykolethergruppen enthaltenden Polyethylenoxidaddukte and Polypropylenglykol, Ethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Ethylenglykoleinheiten.

Als Beispiele nichtionischer Tenside seien Nonylphenolpolyethoxyethanole, Ricinusölpolyglykolether, Polypropylen-Polyethylenoxidaddukte, Tributylphenoxypolyethoxyethanol, Polyethylenglykol und Octylphenoxypolyethoxyethanol erwähnt.

Ferner kommen auch Fettsäureester von Polyoxyethylensorbitan wie das Polyoxyethylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Ethylsulfate vor, z.B. das Stearyltrimethylammoniumchlorid oder das Benzyldi-(2-chlorethyl)-ethylammoniumbromid.

Die in der Formulierungstechnik gebräuchlichen Tenside sind u.a. in folgenden Publikationen beschrieben: "Mc Cutcheon's Detergents and Emulsifiers Annual" MC Publishing Corp., Ridgewood New Jersey, 1981. Stache, H., "Tensid-Taschenbuch", Carl Hanser Verlag, München/Wien, 1981.

Die agrochemischen Zubereitungen enthalten in der Regel 0,1 bis 99 Gewichtsprozent, insbesonder 0,1 bis 95 Gew.-%, Wirkstoff der Formel II oder Wirkstoffgemisch Antidot/Herbizid, 1 bis 99,9 Gew.-%, insbesonder 5 bis 99,8 Gew.-%, eines festen oder flüssigen Zusatzstoffes und 0 bis 25 Gew.-%, insbesondere 0,1 bis 25 Gew.-%, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Für die Verwendung von Verbindungen der Formel II oder sie enthaltender Mittel zum Schützen von Kulturpflanzen gegen schädigende Wirkungen von Herbiziden der Formel I kommen verschiedene Methoden und Techniken in Betracht, wie beispielsweise die folgenden:

i) Samenbeizung

a) Beizung der Samen mit einem als Spritzpulver formulierten Wirkstoff der Formel II durch Schütteln in einem Gefäß bis zur gleichmäßigen Verteilung auf der Samenoberfläche (Trockenbeizung). Man verwendet dabei etwa 1 bis 500 g Wirkstoff der Formel II (4 g bis 2 kg Spritzpulver) pro 100 kg Saatgut.

b) Beizung der Samen mit einem Emulsionskonzentrat des Wirkstoffs der Formel II nach der Methode a) (Naßbeizung).

c) Beizung durch Tauchen des Saatguts in eine Brühe mit 100-1000 ppm Wirkstoff der Formel II während 1 bis 72 Stunden und gegebenenfalls nachfolgendes Trocknen der Samen (Tauchbeizung).

Man verwendet in der Regel 1 bis 1000 g Antidot, vorzugsweise 5 bis 250 g Antidot, pro 100 kg Saatgut, wobei man je nach Methodik, die auch den Zusatz anderer Wirkstoffe oder Mikronährstoffe ermöglicht, von den angegebenen Grenzkonzentrationen nach oben oder unten abweichen kann (Wiederholungsbeize).

ii) Applikation aus Tankmischung

Eine flüssige Aufarbeitung eines Gemisches von Antidot und Herbizid (gegenseitiges Mengenverhältnis zwischen 10:1 und 1:100) wird verwendet, wobei die Aufwandmenge an Herbizid 0,001 bis 2,0 kg pro Hektar beträgt. Solche Tankmischung wird vor oder nach der Aussaat appliziert.

iii) Applikation in der Saatfurche

Das Antidot wird als Emulsionskonzentrat, Spritzpulver oder als Granulat in die offene besäte Saatfurche eingebracht und hierauf wird nach dem Decken der Saatfurche in normaler Weise das Herbizid im Vorauflaufverfahren appliziert.

iv) Kontrollierte Wirkstoffabgabe

Der Wirkstoff der Formel II wird in Lösung auf mineralische Granulatträger oder polymerisierte Granulate (Harnstoff/Formaldehyd) aufgezogen und trocknen gelassen. Gegebenenfalls kann ein Überzug aufgebracht werden (Umhüllungsgranulate), der es erlaubt, den Wirkstoff über einen bestimmten Zeitraum dosiert abzugeben.

Formulierungsbeispiele für Mischungen der Formel I dem Safener der Formel II (% = Gewichtsprozent)

| F1. Lösungen | a) | b) | c) | d) |
|---|---|---|---|---|
| Wirkstoffmischung | 5 % | 10 % | 50 % | 90 % |
| Dipropylenglykol-methylether | - | 20 % | 20 % | - |
| Polyethylenglykol MG 400 | 20 % | 10 % | - | - |
| N-Methyl-2-pyrrolidon | - | - | 30 % | 10 % |
| Aromat. Kohlenwasserstoffgemisch $C_9$-$C_{12}$ | 75 % | 60 % | - | - |

Die Lösungen sind zur Anwendung in Form kleinster Tropfen geeignet.

| F2. Spritzpulver | a) | b) | c) | d) |
|---|---|---|---|---|
| Wirkstoffmischung | 5 % | 25 % | 50 % | 80 % |
| Na-Ligninsulfonat | 4 % | - | 3 % | - |
| Na-Laurylsulfat | 2 % | 3 % | - | 4 % |
| Na-Diisobutyl-naphtalinsulfonat | - | 6 % | 5 % | 6 % |
| Octylphenol-polyglykolether(7-8 Mol EO) | - | 1 % | 2 % | - |
| Hochdisperse Kieselsäure | 1 % | 3 % | 5 % | 10 % |
| Kaolin | 88 % | 62 % | 35 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| F3. Umhüllungs-Granulate | a) | b) | c) |
|---|---|---|---|
| Wirkstoffmischung | 0.1 % | 5 % | 15 % |
| Hochdisperse Kieselsäure | 0.9 % | 2 % | 2 % |
| Anorg.Trägermaterial (∅0.1 - 1 mm) | 99.0 % | 93 % | 83 % |

wie z.B. $CaCO_3$ oder $SiO_2$

Der Wirkstoff wird in Methylenchlorid gelöst, auf den Träger aufgesprüht und das Lösungsmittel anschließend im Vakuum abgedampft.

| F4. Umhüllung-Granulate | a) | b) | c) |
|---|---|---|---|
| Wirkstoffmischung | 0.1 % | 5 % | 15 % |
| Polyethylenglykol MG 200 | 1.0 % | 2 % | 3 % |
| Hochdisperse Kieselsäure | 0.9 % | 1 % | 2 % |
| Anorg.Trägermaterial (∅0.1 - 1 mm) | 98.0 % | 92 % | 80 % |

wie z.B. $CaCO_3$ oder $SiO_2$

Der fein gemahlene Wirkstoff wird in einem Mischer auf das mit Polyethylenglykol angefeuchtete Trägermaterial gleichmäßig aufgetragen. Auf diese Weise erhält man staubfreie Umhüllungs-Granulate.

| F5. Extruder-Granulate | a) | b) | c) | d) |
|---|---|---|---|---|
| Wirkstoffmischung | 0.1 % | 3 % | 5 % | 15 % |
| Na-Ligninsulfonat | 1.5 % | 2 % | 3 % | 4 % |
| Carobxymethylcellulose | 1.4 % | 2 % | 2 % | 2 % |
| Kaolin | 97.0 % | 93 % | 90 % | 79 % |

Der Wirkstoff wird mit den Zusatzstoffen vermischt, vermahlen und mit Wasser angefeuchtet. Dieses Gemisch wird extrudiert und anschließend im Luftstrom getrocknet.

| F6. Stäubemittel | a) | b) | c) |
|---|---|---|---|
| Wirkstoffmischung | 0.1 % | 1 % | 5 % |
| Talkum | 39.9 % | 49 % | 35 % |
| Kaolin | 60.0 % | 50 % | 60 % |

Man erhält anwendungsfertige Stäubemittel, indem der Wirkstoff mit den Trägerstoffen vermischt und auf einer geeigneten Mühle vermahlen wird.

| F7. Suspension-Konzentrate | a) | b) | c) | d) |
|---|---|---|---|---|
| Wirkstoffmischung | 3 % | 10 % | 25 % | 50 % |
| Ethylenglykol | 5 % | 5 % | 5 % | 5 % |
| Nonylphenol-polyglykolether (15 Mol EO) | - | 1 % | 2 % | - |
| Na-Ligninsulfonat | 3 % | 3 % | 4 % | 5 % |
| Carboxymethylcellulose | 1 % | 1 % | 1 % | 1 % |
| 37%ige wäßrige Formaldehyd-Lösung | 0.2 % | 0.2 % | 0.2% | 0.2 % |
| Silikonöl-Emulsion | 0.8 % | 0.8 % | 0.8 % | 0.8 % |
| Wasser | 87 % | 79 % | 62 % | 38 % |

Der feingemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

## Biologische Beispiele

Die Fähigkeit der Verbindungen der Formel II, Kulturpflanzen vor der phytotoxischen Wirkung starker Herbizide zu schützen, kann aus den folgenden Beispielen ersehen werden.

### Beispiel B1: Post-emergente phytotoxische Wirkungen der Herbizide der Formel I und der Mischungen Herbizid mit Safener der Formel II auf Weizen und Gerste

Unter Gewächshausbedingungen werden Weizen und Gerste in Kunststofftöpfen bis zum 4-Blattstadium angezogen. In diesem Stadium werden zum einen das Herbizid der Tabelle 1 allein als auch die Mischungen des Herbizids mit den Safenern der Tabelle 2 auf die Testpflanzen appliziert. Die Applikation erfolgt als wäßrige Suspension gemäß Beispiel F7der Prüfsubstanzen mit 500 l Wasser/ha. 28 Tage nach Applikation wird mit einer Prozentskala ausgewertet. 100 % bedeutet Testpflanze ist abgestorben, 0 % bedeutet keine phytotoxische Wirkung. Es werden die in Tabelle B1 dargestellten Resultate erhalten. Die Resultate zeigen, daß mit den Safenern der Tabelle 2 die durch das Herbizid der Tabelle 1 verursachte Schädigung auf Weizen und Gerste deutlich reduziert werden kann.

Tabelle 1: Verbindungen der Formel I:

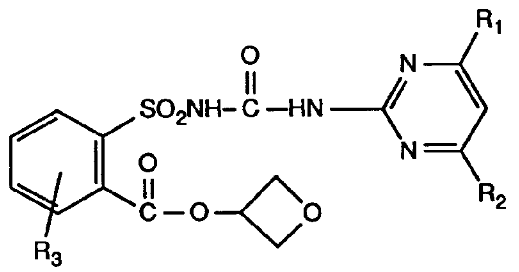

(I)

| Verb. Nr. | $R_1$ | $R_2$ | $R_3$ | Phys.Daten |
|---|---|---|---|---|
| 1.01 | $CH_3$ | $CH_3$ | H | |
| 1.02 | $OCH_3$ | $CH_3$ | H | |
| 1.03 | $OCH_3$ | $OCH_3$ | H | |
| 1.04 | $CH_3$ | $OCH_3$ | 4-F | Zers. > 140°C |

Tabelle 2: Verbindungen der Formel II:

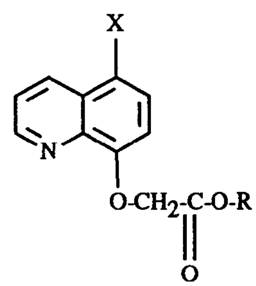

(II)

| Verb. Nr. | X | R |
|---|---|---|
| 2.01 | Cl | 1-Methylhexyl |
| 2.02 | Cl | Wasserstoff |
| 2.03 | Cl | n-Octyl |
| 2.04 | Cl | 1-Methylpropyl |

Tabelle B1:

Die Aufwandmenge des Safeners in der folgenden Tabelle beträgt 125 g AS/ha.

| Herbizid Verb.Nr. | Aufwandm. Herbizid | Safener Verb.Nr. | Phytotoxische Wirkung in % Weizen | Gerste |
|---|---|---|---|---|
| 1.01 | 60 g/ha | ___ | -- | 80 |
| 1.01 | 30 g/ha | --- | -- | 65 |
| 1.01 | 60 g/ha | 2.01 | -- | 40 |
| 1.01 | 30 g/ha | 2.01 | -- | 20 |
| 1.02 | 15 g/ha | --- | 85 | -- |
| 1.02 | 15 g/ha | 2.01 | 15 | -- |
| 1.02 | 15 g/ha | 2.02 | 15 | -- |
| 1.02 | 15 g/ha | 2.03 | 25 | -- |
| 1.02 | 15 g/ha | 2.04 | 15 | -- |
| 1.03 | 15 g/ha | --- | -- | 70 |
| 1.03 | 8 g/ha | --- | -- | 40 |
| 1.03 | 15 g/ha | 2.01 | -- | 30 |
| 1.03 | 8 g/ha | 2.01 | -- | 10 |
| 1.04 | 60 g/ha | --- | 15 | 40 |
| 1.04 | 60 g/ha | 2.01 | 0 | 20 |

Dieselben Resultate werden erhalten, wenn man die Verbindungen der Formel I bzw.II gemäß den Beispielen F1 bis F6 formuliert.

**Patentansprüche**

1. Mittel zur selektiven Kontrolle von Unkräutern in Kulturen von Nutzpflanzen, dadurch gekennzeichnet, daß es neben inerten Trägerstoffen und Zusatzmaterialien als Wirkstoff eine Mischung enthält, die

a) aus einer herbizid wirksamen Menge eines Sulfonylharnstoffs der Formel I

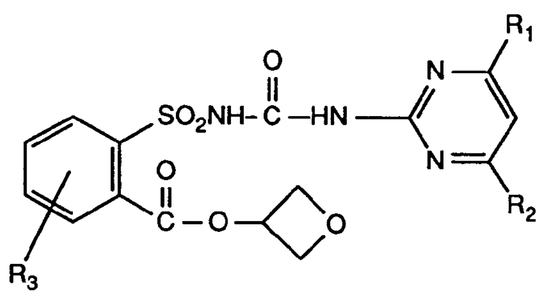

(I)

worin

$R_1$ und $R_2$ unabhängig voneinander Methyl oder Methoxy;

$R_3$ Wasserstoff, Halogen, Methyl oder Methoxy bedeuten; und

b) als Safener aus einer herbizid-antagonistisch wirksamen Menge eines Chinolinderivates der Formel II

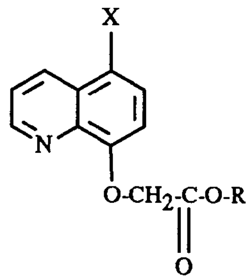

(II),

worin
R für Wasserstoff oder $C_1$-$C_8$-Alkyl und
X für Wasserstoff oder Chlor stehen; besteht.

2. Mittel gemäß Anspruch 1, dadurch gekennzeichnet, daß $R_3$ für Wasserstoff steht.

3. Mittel gemäß Anspruch 1, dadurch gekennzeichnet, daß $R_3$ für 4-Fluor steht.

4. Mittel gemäß Anspruch 1, dadurch gekennzeichnet, daß $R_1$ für Methoxy steht.

5. Mittel gemäß Anspruch 4, dadurch gekennzeichnet, daß X für Chlor und R für $C_4$-$C_8$-Alkyl steht.

6. Mittel gemäß Anspruch 5, dadurch gekennzeichnet,daß R für 1-Methylhexyl steht.

7. Mittel gemäß Anspruch 1, dadurch gekennzeichnet, daß $R_1$ für Methyl und $R_2$ für Methoxy steht.

8. Mittel gemäß Anspruch 7, dadurch gekennzeichnet, daß X für Chlor und R für $C_4$-$C_8$-Alkyl steht.

9. Mittel gemäß Anspruch 8, dadurch gekennzeichnet, daß R für 1-Methylhexyl steht.

10. Mittel gemäß Anspruch 1, dadurch gekennzeichnet, daß es eine herbizid wirksame Menge eines Sulfonylharnstoffs der Formel Ia

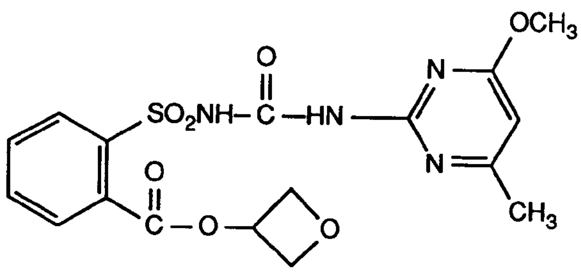

(Ia)

und als Safener eine herbizid-antagonistisch wirksame Menge eines Chinolinderivates der Formel IIa

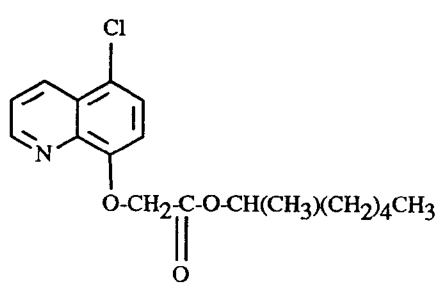

(IIa)

enthält.

11. Verfahren zum selektiven Bekämpfen von Unkräutern und Gräsern in Nutzpflanzenkulturen, dadurch gekennzeichnet, daß man die Kulturen, deren Saatgut oder deren Anbaufläche gleichzeitig oder unabhängig

voneinander mit einer wirksamen Menge eines Herbizides der Formel I gemäß Anspruch 1 und einer herbizid-antagonistisch wirksamen Menge einer Verbindung der Formel II gemäß Anspruch 1 behandelt.

**12.** Verfahren gemäß Anspruch 11, dadurch gekennzeichnet, daß man Kulturpflanzenbestände oder Anbauflächen für Kulturpflanzen mit 0,001 bis 2 kg/ha einer Verbindung der Formel I gemäß Anspruch 1 und einer Menge von 0,001 bis 5 kg/ha einer Verbindung der Formel II gemäß Anspruch 1 behandelt.

**13.** Verfahren gemäß Anspruch 11 zum selektiven Bekämpfen von Unkräutern und Gräsern in Getreidekulturen.

**14.** Verfahren gemäß Anspruch 13, dadurch gekennzeichnet, daß es sich bei den Getreidekulturen um Weizen oder Gerste handelt.

Europäisches Patentamt

# EUROPÄISCHER RECHERCHENBERICHT

Nummer der Anmeldung
EP 93 81 0524

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y | EP-A-0 492 367 (HOECHST AG)<br>* Seite 2, Zeile 1 - Zeile 38 *<br>* Seite 6, Zeile 15 - Zeile 32 *<br>see page 7, lines 54, 55<br>* Seite 8, Zeile 23 - Zeile 51 *<br>* Beispiele 1,8 *<br>* Ansprüche 1,8,9,11,12,14 *<br>--- | 1-14 | A01N47/36<br>A01N25/32<br>//(A01N47/36, 43:42,25:32) |
| Y,D | EP-A-0 496 701 (CIBA-GEIGY AG)<br>* Seite 3 - Seite 4, Zeile 7 *<br>* Seite 5, Zeilen 19,22 *<br>* Seite 7, Zeile 40 - Zeile 51 *<br>* Seite 9, Zeile 54 - Seite 10, Zeile 1 *<br>* Ansprüche 1,13,19-25 *<br>----- | 1-14 | |
| | | | **RECHERCHIERTE SACHGEBIETE (Int.Cl.5)** |
| | | | A01N |

Der vorliegende Recherchenbericht wurde für alle Patentansprüche erstellt

| Recherchenort | Abschlußdatum der Recherche | Prüfer |
|---|---|---|
| DEN HAAG | 29. Oktober 1993 | MUELLNERS, W |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)